# EUROPÄISCHE PATENTSCHRIFT

(11) **EP 1 367 660 B1**
(45) Veröffentlichungstag und Bekanntmachung des Hinweises auf die Patenterteilung: **30.03.2011**
(21) Anmeldenummer: 02009201.1
(22) Anmeldetag: 24.04.2002
(51) Int. Cl.: H01M 2/30, H01M 10/12

(54) **Verfahren zur Herstellung von Endpolen für den Anschluss elektrischer Polverbinder für Batterien**
Method for fabricating terminal pins for the connection of electrical terminal connector for batteries
Procédé de fabrication des bornes terminales pour la connection de connecteurs electriques de batteries

(43) Veröffentlichungstag der Anmeldung: 03.12.2003
(60) Teilanmeldung: 10172370.8
(73) Patentinhaber: JL Goslar GmbH & Co. KG, 38640 Goslar (DE)
(72) Erfinder: KRÜSEMER Rolf, D-52355 Düren (DE)
(74) Vertreter: Richter, Werdermann, Gerbaulet & Hofmann

(56) Entgegenhaltungen:
- EP-A- 0 261 311
- DE-A- 4 138 760
- DE-C- 19 936 797
- US-A- 1 484 481
- US-A- 3 256 511
- US-A- 4 212 934

## Beschreibung

Die Erfindung betrifft ein Verfahren zum Herstellen von Endpolen für den Anschluss elektrischer Polverbinder für Batterien, insbesondere leistungsstarke Akkumulatoren, stationäre Batterien und dgl., bei dem im Kaltpressverfahren Bleimaterial in einen Hohlraum einer Hohlform gepresst wird. Zudem betrifft die Erfindung einen Endpol für den Anschluss elektrischer Polverbinder für Batterien.

Verfahren der eingangs genannten Art sind bekannt, wobei leistungsstarke Batterien und Akkumulatoren, stationäre Batterien im Prinzip den gleichen Aufbau aufweisen und in Straßenfahrzeugen und Flurförderzeugen eingesetzt werden. Neben Blei- und Säurebatterien sind Nickel-Batteriesysteme, Natrium-Batteriesysteme und Lithium-Batteriesysteme bekannt. Das Grundelement einer Kraftfahrzeugbatterie ist beispielsweise die Bleizelle, ein galvanisches Element, die sich aus einer größeren Anzahl positiver und negativer Platten zusammensetzt, die aus Blei und Bleiverbindungen bestehen. Statt einfacher Platten werden oftmals Gitterplatten mit einem Gitter aus hochwertigen Hartbleilegierungen eingesetzt, in das die aktive Masse eingepresst ist. Positive Platten und negative Platten unterscheiden sich dabei durch die Gitterform und die Art der aktiven Massen. Beide Plattensätze werden, um einen Plattenschluss zu vermeiden, durch Separatoren (Trennwände) aus säurefestem Material in einen bestimmten Abstand gehalten, um ein Kurzschließen durch Materialwandungen zu verhindern. Die gesamte Anordnung erfolgt in einem Blockkasten. Mit den positiven Platten und den negativen Platten verbundene Endpole dienen für den Anschluss elektrischer Polverbinder.

Das Dokument DE 41 38 760 A1 offenbart dabei ein Herstellungsverfahren für einen Formkörper, insbesondere für Batteriepole, bei dem der Formkörper einen Grundkörper aufweist, der mit einem Teilkörper drehfest verbunden ist, wobei der Grund- und der Teilkörper aus nicht-Eisen-Metall oder der eine Körper aus einem nicht-Eisen-Metall und der andere Körper aus Eisen bzw. Stahl besteht. Dabei werden der Grund- und der Teilkörper als Grund- und Teilkörperrohling in eine dem Formkörper entsprechende Pressform eingebracht. Zudem ist der Teilkörperrohling zumindest in einem Einschubbereich in eine dem Einschubbereich entsprechende Öffnung des Grundkörperrohlings eingebracht. Unter Druckaufwendung in der Pressform werden die beiden Rohlinge dann zu einem Grundkörper verpresst. Die beiden Rohlinge können dabei entweder im kalten oder im warmen Zustand verpresst werden.

Nachteilig bei dem vorbekannten Verfahren ist es, dass eine konstruktive Ausgestaltung der Öffnungen erfolgen muss.

Es ist deshalb Aufgabe der vorliegenden Erfindung, ein Verfahren der eingangs genannten Art derart weiterzubilden, dass die genannten Nachteile des Verfahrens vermieden werden.

Diese Aufgabe wird mit den Merkmalen des Anspruchs 1 oder 2 gelöst.

Grundlegende Idee der Erfindung ist es, einen Teilkörperrohling, bspw. in Gestalt eines aufwendig gestalteten Endpols, während des Pressvorgangs in einen Grundkörperrohling aus Bleimaterial zu integrieren. Vielmehr ist gemäß der Erfindung vorgesehen, dass in dem oberen Bereich eines der Form des Endpols entsprechenden bodenseitig offenen Hohlraums einer ein- und mehrteiligen Hohlform eine mit einem Innengewinde versehene Hülse aus Stahl oder einem anderen geeigneten Material eingesetzt wird. Hierdurch kann im Falle eines Endpols auf einen aufwendig gestalteten Einschubbereich in dem Bleimaterial verzichtet werden.

Alternativ zu diesem Verfahren kann dies auch dadurch erreicht werden, dass der Teilkörperrohling in Gestalt der Gewindehülse zusammen mit dem Bleimaterial in den Hohlraum gepresst wird. Auch bei dieser Verfahrensweise erfolgt eine homogene Einbindung der Gewindehülse in das Bleimaterial des Formkörpers bzw. des Endpols. Nach dieser Verfahrensvariante erfolgt keine Anordnung der Gewindehülse in den Hohlraum der Hohlform vor dem Einpressen des Bleimaterials in den Hohlraum.

Beiden Verfahrensvarianten ist gemeinsam, dass ein Teilkörperrohling während des Pressvorgangs in einen Grundkörperrohling integriert wird.

Weitere vorteilhafte Ausgestaltungen der Erfindung sind Gegenstand der Unteransprüche.

So besteht z. B. die Möglichkeit, die Gewindehülse für den Anschluss elektrischer Polverbinder bei der Herstellung des Endpols in den Hohlraum der Hohlform anzuordnen, so dass dann durch das Kaltpressen des Blei-Materials die Gewindehülse in das Bleimaterial homogen eingebunden wird. Darüberhinaus besteht jedoch auch die Möglichkeit, die Gewindehülse zusammen mit dem Blei-Material in den Hohlraum der Hohlform zu pressen, so dass dann bei diesem Vorgang die Einbindung der Gewindehülse in das Material des Endpols erfolgt.

Die Erfindung wird nachstehend anhand von Ausführungsbeispielen näher erläutert. Es zeigen:
- Fig. 1: in einer schaubildlichen Ansicht eine Batterie mit aus dem Blockkasten der Batterie herausragenden Endpolen,
- Fig. 2: eine schaubildliche Ansicht eines Endpols mit in das Endpol- Material homogen eingebundener Gewindehülse,
- Fig. 3: eine Seitenansicht des Endpols gemäß Fig. 2,
- Fig. 4: eine Ansicht von unten auf den Endpol gemäß Fig. 2,
- Fig. 5: eine Ansicht von oben auf den Endpol gemäß Fig. 2,
- Fig. 6: eine schaubildliche Ansicht einer weiteren Ausführungsform eines Endpols mit in das Endpol-Material homogen eingebundener Gewindehülse und mit einer Kunststoffummantelung,
- Fig. 7: eine Seitenansicht des Endpols gemäß Fig. 6,
- Fig. 8: eine Ansicht von unten auf den Endpol gemäß Fig. 6,
- Fig. 9: eine Ansicht von oben auf den Endpol gemäß Fig. 6,
- Fig. 10: einen senkrechten Schnitt durch eine Hohlform mit einem der Form des zu erstellenden Endpols entsprechenden Hohl- raum mit im oberen Bereich eingesetzter Gewindehülse, ei- nem Pressstempel und einer Pb-Platine vor dem Einpressen des Blei-Materials in den Hohlraum der Hohlform,
- Fig. 11: einen senkrechten Schnitt durch die Hohlform gemäß Fig. 10, jedoch mit in den Hohlraum der Hohlform teilweise ein- gepresstem Blei-Material,
- Fig. 12: einen senkrechten Schnitt durch die Hohlform gemäß Fig. 10 mit in den Hohlraum eingepresstem Blei-Material bei gleich- zeitiger homogener Einbindung der Gewindehülse in das Blei-Material,
- Fig. 13: einen senkrechten Schnitt durch die Hohlform gemäß Fig. 10 mit fertig hergestelltem Endpol vor dem Öffnen der Hohlform,
- Fig. 14: einen senkrechten Schnitt durch eine Hohlform mit einem der Form des zu erstellenden Endpols entsprechenden Hohl- raum mit auf die Pb-Platine aufgesetzter Gewindehülse vor dem Einpressen des Blei-Materials zusammen mit der Ge- windehülse in dem Hohlraum der Hohlform,
- Fig. 15: einen senkrechten Schnitt der in das Blei-Material des End- pols homogen eingebundenen Gewindehülse und
- Fig. 16: einen senkrechten Schnitt durch die Gewindehülse mit einer Außenwandaufrauhung bei erfolgter homogenen Einbindung der Gewindehülse in das Blei-Material des Endpols.

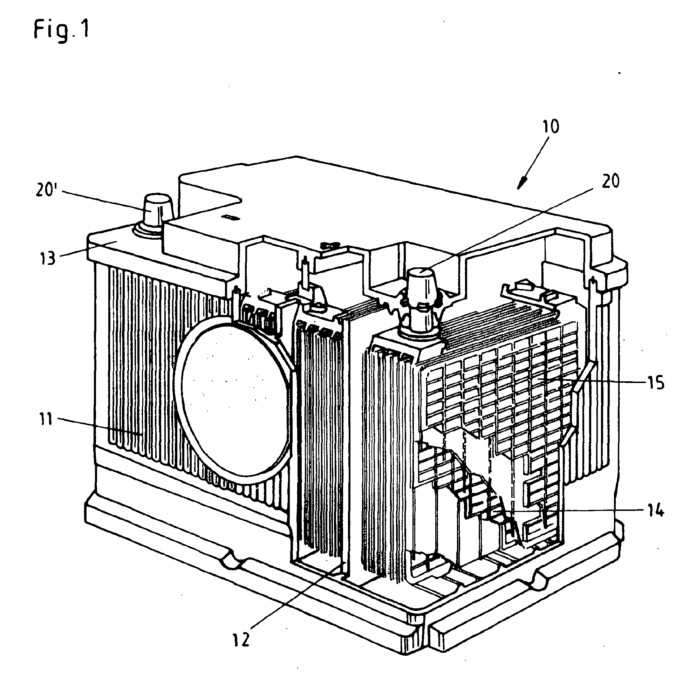

Fig. 1 zeigt eine herkömmliche Batterie 10, die aus einem Blockkasten 11 besteht, der mit einem oberen Blockdeckel 13 versehen ist. Der Innenraum, d. h. die Zelle des Blockkastens, ist unterteilt durch Zelltrennwände 12 zur Aufnahme von Plus-Platten 14 und Negativ-Platten 15, wobei die Plus-Platten und die Negativ-Platten über Polbrücken miteinander verbunden sind, die mit Endpolen 20, 20' verbunden sind.

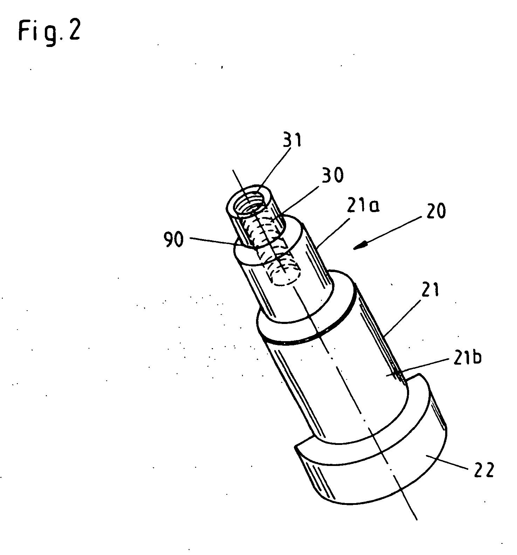

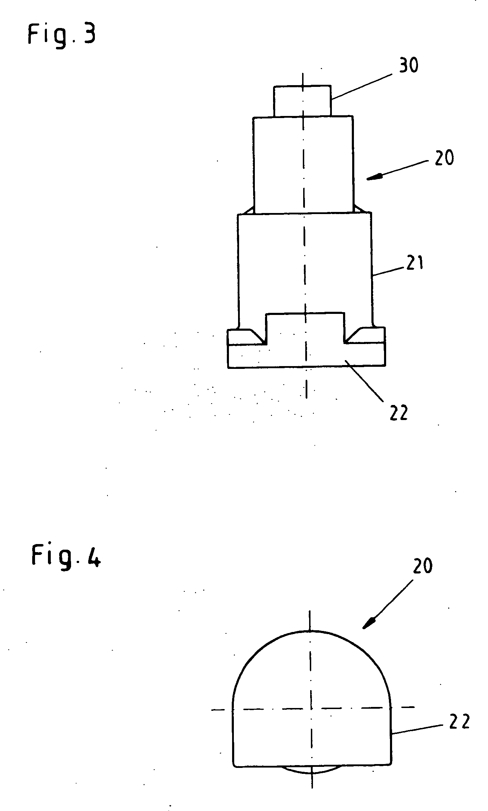

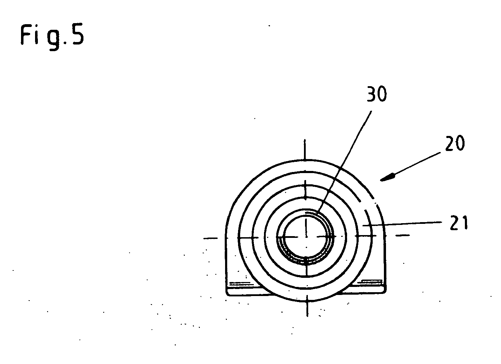

Der in den Fig. 2 bis 5 dargestellte Endpol 20 besteht aus einem in etwa zylindrischen Formkörper 21 aus einem Blei-Material. Das obere Ende des Formkörpers 21 ist mit 21a und das untere Ende mit 21b bezeichnet. An das untere Ende 21b des Formkörpers 21 ist eine Anformung 22 vorgesehen, über die dann die Negativ-Platten oder die Plus-Platten angeschlossen werden. Das obere Ende 21a des Formkörpers 21 weist eine in das Blei-Material des Endpols 20 eingearbeitete Gewindehülse 30 auf, die mit einem Innengewinde 31 versehen ist und aus Stahl oder einem anderen geeigneten Werkstoff besteht. Der Formkörper 21 des Endpols 20 entsprechend Fig. 2 bis 5 weist stufenweise sich verbreiternde Formkörperabschnitte auf.

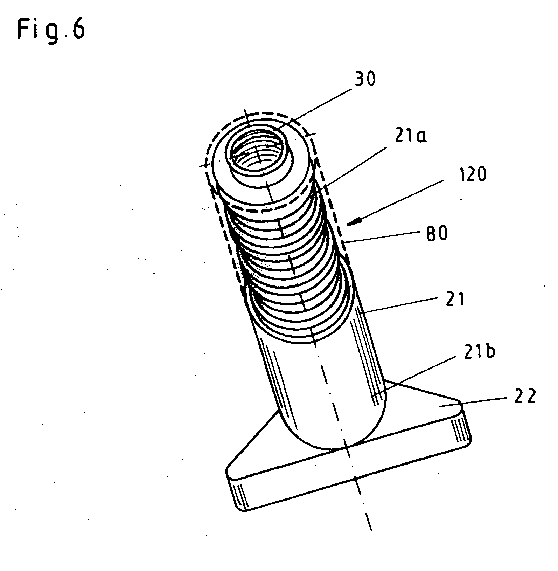

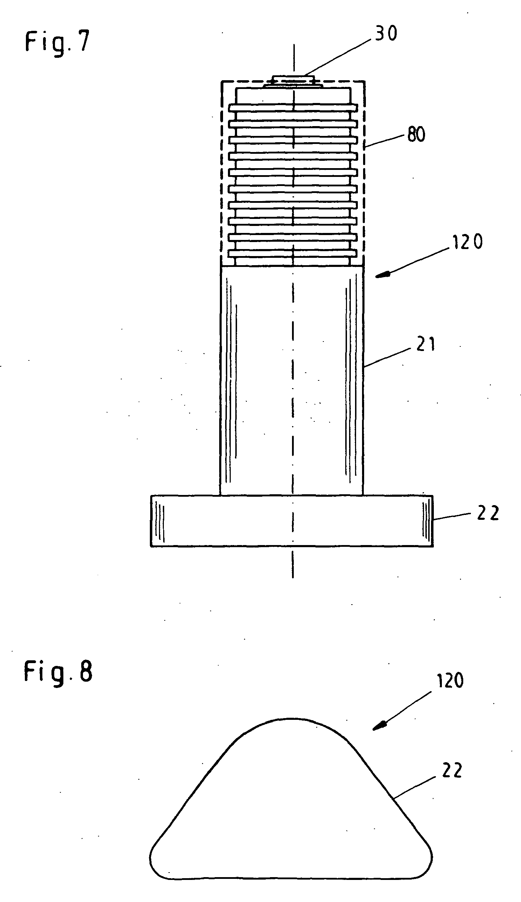

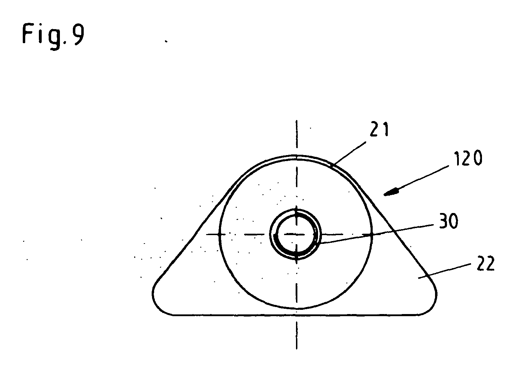

Bei der Ausführungsform eines Endpols 120 entsprechend der Fig. 6 bis 9 besteht der Endpol aus einem zylindrischen Formkörper der beispielsweise in seinem oberen Abschnitt mit einer außenwandseitig ausgebildeten Rillenstruktur versehen ist. Außerdem ist der Formkörper mit einem Kunststoffmantel 80 versehen. Auch dieser Endpol 120 weist in seinem oberen Bereich eine in das Blei-Material des Endpols eingelassene Gewindehülse 30 aus Stahl oder einem anderen geeigneten Werkstoff auf.

Die Gewindehülse 30 mit dem Innengewinde 31 ist bei der Herstellung des Endpols in das Blei-Material des Endpols homogen eingebunden. Die Herstellung des Endpols 20 bzw. 120 erfolgt dabei im Kaltpressverfahren.

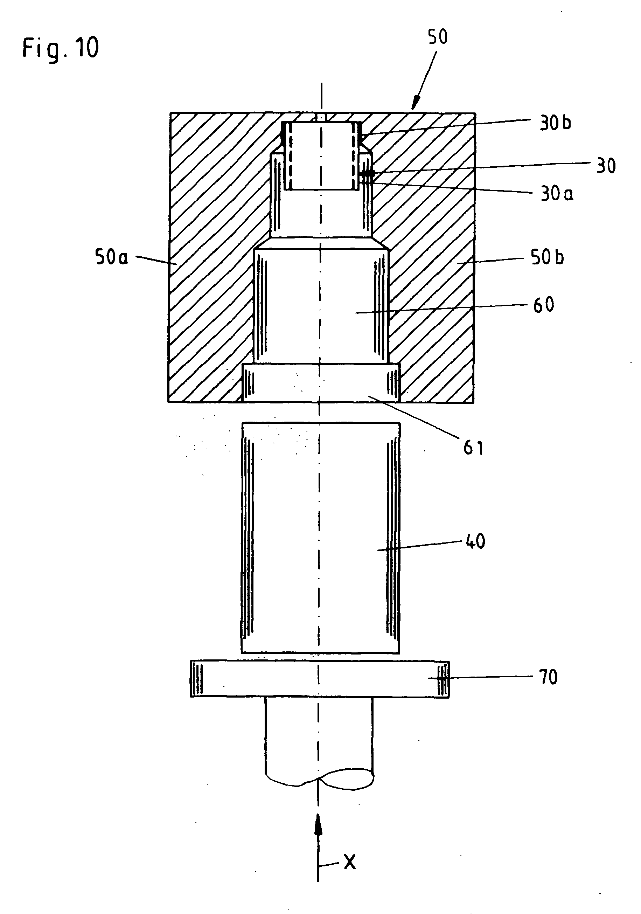

Die Fig. 10, 11, 12, 13 zeigen verschiedene Verfahrensschritte für die Herstellung des Endpols 20 aus einem Blei-Material. Hierbei wird ausgegangen von einer Hohlform 50 die einteilig oder mehrteilig ausgebildet sein kann. Im dargestellten Ausführungsbeispiel ist die Hohlform 50 zweiteilig ausgebildet und besteht aus den beiden Hohlformteilen 50a, 50b. In der Hohlform 50 ist ein Hohlraum 60 ausgebildet, der der Form des herzustellenden Endpols 20 entspricht. Dieser Hohlraum 60 ist bodenseitig offen ausgebildet. Die bodenseitige Öffnung ist bei 61 angedeutet.

In dem oberen Bereich des Hohlraumes 60 der Hohlform 50 ist eine Gewindehülse 30 mit einem Innengewinde 31 angeordnet, wobei die Länge der Gewindehülse 30 den jeweiligen Erfordernissen entsprechend bemessen ist. Diese Gewindehülse 30 aus Stahl erstreckt sich dabei mit einem Abschnitt 30a in den Hohlraum 60, so dass die Gewindehülse 30 mit ihrem oberen Abschnitt 30b aus dem Hohlraum 60 herausragt.

Das Einpressen des Blei-Materials 40 in den Hohlraum 60 der Hohlform 50 erfolgt mittels eines druckbeaufschlagten Pressstempels 70. Vermittels dieses Pressstempels 70 wird das Blei-Material z. B. in Form einer Pb-Platine 40 in den Hohlraum 60 der Hohlform 50 gepresst, wobei der Pressstempel 70 in Pfeilrichtung X gegen die Hohlform 50 bewegt wird (Fig. 10).

Die Menge des eingesetzten Blei-Materials 40 entspricht in etwa derjenigen Menge an Blei-Material, die für die Herstellung des Endpols 20 benötigt wird und von dem Hohlraum 60 der Hohlform 50 aufgenommen wird.

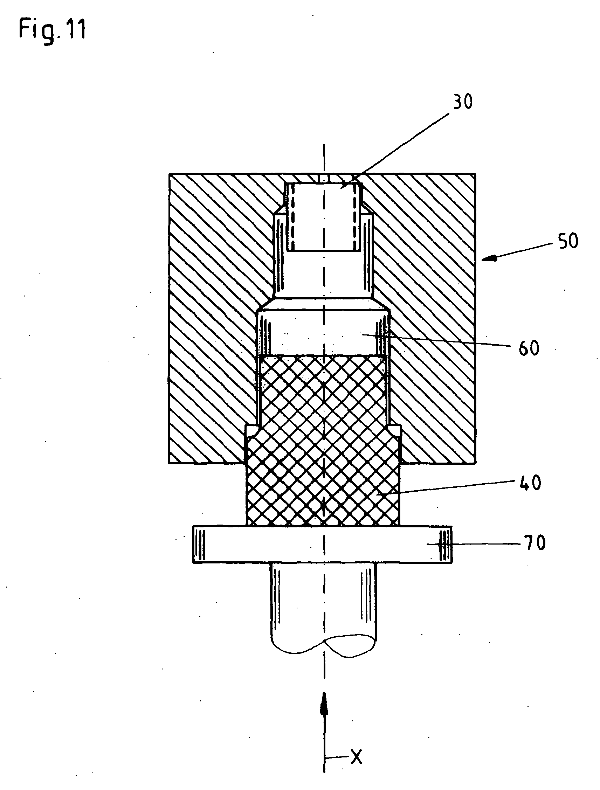

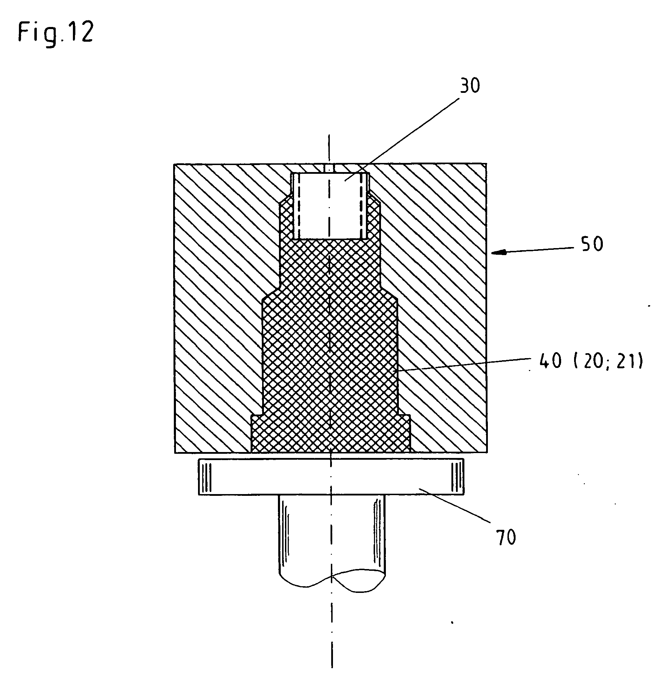

Bei einem Vorschub des Pressstempels 70 in Pfeilrichtung X wird das Blei-Material 40 in den Hohlraum 60 der Hohlform 50 gepresst (Fig. 11) bis der gesamte Hohlraum 60 mit dem Blei-Material ausgefüllt ist (Fig. 12), wobei dann gleichzeitig die Gewindehülse 30 homogen eingebunden wird in das Blei-Material des Formkörpers, der den Endpol 20 bildet. Das Einpressen des Blei-Materials in den Hohlraum 60 des Hohlraumes 50 erfolgt im Kaltpressverfahren, was jedoch nicht ausschließt, dass das eingesetzte Blei-Material vorgewärmt sein kann.

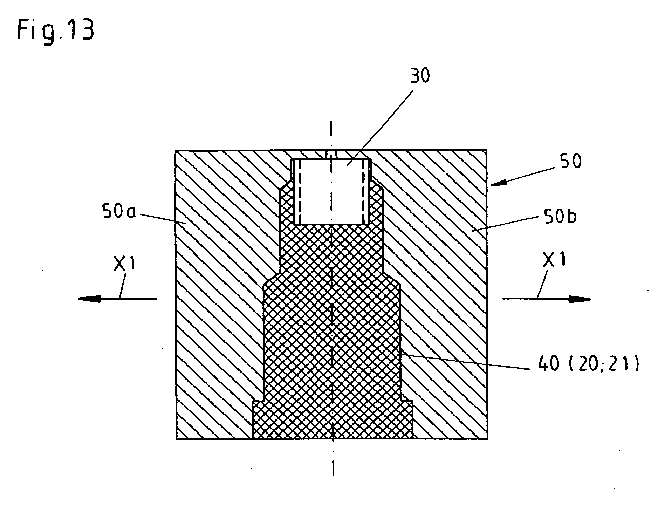

Ist der Herstellungsprozess beendet, dann werden die beiden Hohlformteile 50a, 50b in Pfeilrichtung X1 auseinander bewegt und das Fertigprodukt, hier der Endpol 20, erhalten (Fig. 13 und Fig. 2).

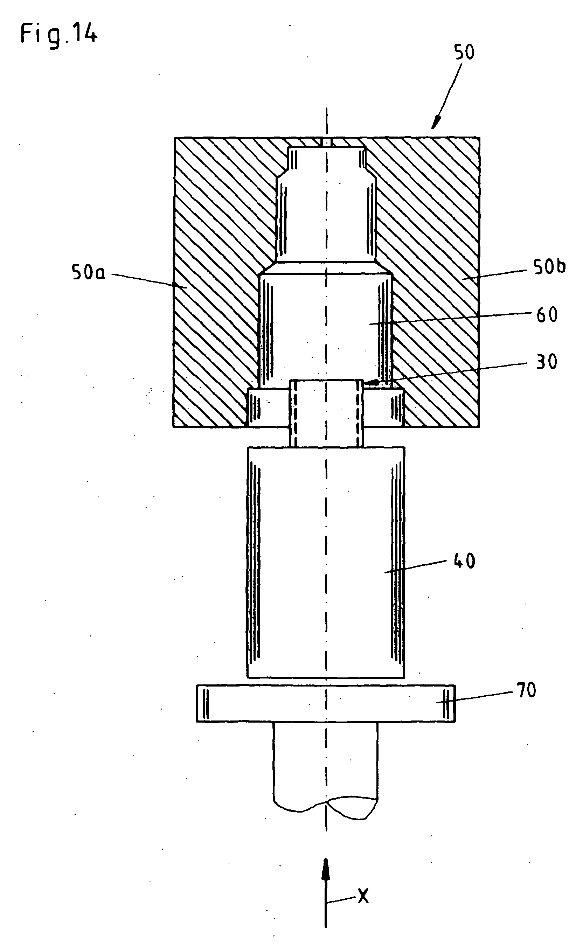

Gemäß Fig. 14 besteht die Möglichkeit, das Verfahren zum Herstellen von Endpolen derart vorzunehmen, dass über die bodenseitige Öffnung 61 des Hohlraumes 60 der Hohlform 50 das Blei-Material, z. B. eine Pb-Platine 40, in einer dem herzustellenden Formkörper entsprechenden Materialmenge vermittels eines druckbeaufschlagten Pressstempels zusammen mit einer ein Innengewinde 31 aufweisenden auf der Pb-Platine 40 aufsitzenden Gewindehülse 30 im Kaltpressverfahren bei gleichzeitiger homogener Einbindung der Gewindehülse in das Pb-Material des Formkörpers 21 gepresst wird. Nach diesem Verfahren erfolgt somit keine Anordnung der Gewindehülse 30 in den Hohlraum 60 der Hohlform 50 vor dem Einpressen des Blei-Materials in den Hohlraum 60, sondern die Gewindehülse 30 wird zusammen mit dem Blei-Material in den Hohlraum 60 gepresst. Auch bei dieser Verfahrensweise erfolgt eine homogene Einbindung der Gewindehülse 30 in das Blei-Material des Formkörpers 21 bzw. des Endpols 20 (Fig. 14).

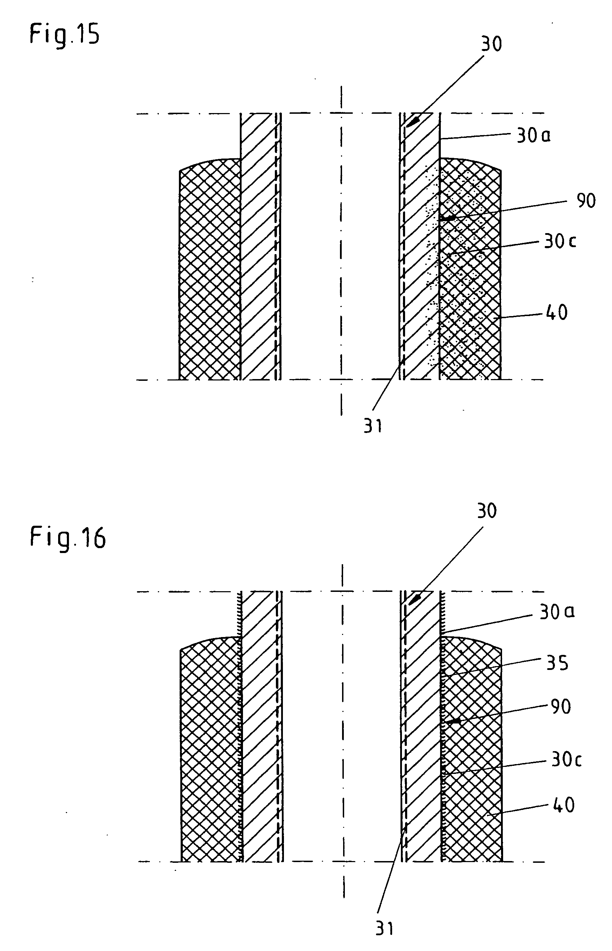

Fig. 15 zeigt schematisch die homogene Einbindung des Materials der Gewindehülse 30 in das Blei-Material 40 des Formkörpers 21 der den Endpol 20 bildet. Diese homogene Einbindung 90 im Außenwandbereich der Gewindehülse 30 ist bei 90 angedeutet.

Um diese homogene Einbindung 90 noch zu verstärken, kann nach einer weiteren Ausführungsform die Außenwandfläche 30c aufgerauht bzw. mit einem Rauhgrund 35 versehen sein, der beispielsweise als Außenwandprofilierung ausgebildet ist, so dass neben der homogenen Einbindung auch noch zusätzlich eine Materialverzahnung erfolgt (Fig. 16.)

## Patentansprüche

1. Verfahren zum Herstellen von Endpolen (20; 120) für den Anschluss elektrischer Polverbinder für Batterien, insbesondere leistungsstarke Akkumulatoren, stationäre Batterien u. dgl., bei dem im Kaltpressverfahren Bleimaterial in einen Hohlraum einer Hohlform gepresst wird,
**dadurch gekennzeichnet,**
**dass** in dem oberen Bereich eines der Form des Endpols (20; 120) entsprechenden, bodenseitig offenen Hohlraumes (60) einer ein- oder mehrteiligen Hohlform (50) eine mit einem Innengewinde (31) und mit einem nach auβen zeigenden offenen sowie mit einem in einen Formkörper (21) einzubindenden, abgeschlossenen Ende versehene sowie mit ihrem oberen Abschnitt aus dem Hohlraum (60) herausragende Hülse (30) aus Stahl oder einem anderen geeignetem Material passgenau eingesetzt, hierauf vermittels eines druckbeaufschlagten Pressstempels (70) das Material einer Pb-Platine (40) in einer dem herzustellenden Formkörper (21) entsprechenden Materialmenge in den Hohlraum (60) der Hohlform (50)im Kaltpressverfahren bei gleichzeitiger homogener Einbindung der Gewindehülse (30) in das Blei-Material des Formkörpers (21) gepresst und danach der Formkörper (21) mit seiner homogen in das Blei-Material eingebundenen Gewindehülse (30) der Hohlform (50) entnommen wird.

2. Verfahren zum Herstellen von Endpolen (20; 120) für den Anschluss elektrischer Polverbinder für Batterien, insbesondere für leistungsstarke Akkumulatoren, stationäre Batterien u. dgl., bei dem im Kaltpressverfahren Bleimaterial in einen Hohlraum einer Hohlform gepresst wird,
**dadurch gekennzeichnet,**
**dass** über die bodenseitige Öffnung (61) eines der Form des herzustellenden Endpols (20; 120) entsprechenden Hohlraumes (60) einer ein- oder mehrteiligen Hohlform (50) das Material einer Pb-Platine (40) in einer dem herzustellenden Formkörper (21) entsprechenden Materialmenge vermittels eines druckbeaufschlagten Pressstempels (70) zusammen mit einer ein Innengewinde (31) aufweisenden, auf der Pb-Platine (40) aufsitzenden Gewindehülse (30) im Kaltpressverfahren bei gleichzeitiger homogener Einbindung der Gewindehülse (30) in das Pb-Material des Formkörpers (21) in den Hohlraum (60) der Hohlform (50) gepresst und danach der Formkörper (21) mit seiner homogenen in das Pb-Material eingebundenen Gewindehülse (30) der Hohlform (50) entnommen wird.

3. Verfahren nach einem der Ansprüche 1 oder 2,
**dadurch gekennzeichnet,**
**dass** der Formkörper (21) des Endpols (20; 120) mit seiner homogen eingebundenen Gewindehülse (30) mit einem Kunststoff ummantelt wird.

4. Verfahren nach einem der Ansprüche 1 bis 3,
**dadurch gekennzeichnet,**
**dass** die Außenwandfläche (30c) der Gewindehülse (30) aufgerauht ist bzw. mit einem Rauhgrund in Form einer Außenwandprofilierung versehen ist.

## Claims

1. A method for producing end terminals (20; 120) for the connection of electrical terminal connectors for batteries, in particular powerful accumulators, stationary batteries and the like, in which lead material is pressed into a cavity of a hollow mould in a cold pressing process,
**characterized in that**
a bush (30) made of steel or any other suitable material, provided with an internal thread (31) and with an open end pointing outward as well as with a closed end to be incorporated into a moulding (21), and projecting from the cavity (60) with its upper section is precisely fitted into the upper area of a cavity (60), corresponding to the form of the end terminal (20; 120), open at the bottom side, of a one or multi-part hollow mould (50), the material of a Pb circuit board (40), in a material quantity corresponding to the moulding (21) to be produced, is then pressed into the cavity (60) of the hollow mould (50) by means of a pressurized plunger (70) in a cold pressing process, while simultaneously homogeneously incorporating the threaded bush (30) into the lead material of the moulding (21), and the moulding (21) with its threaded bush (30) homogeneously incorporated into the lead material is afterwards removed from the hollow mould (50).

2. A method for producing end terminals (20; 120) for the connection of electrical terminal connectors for batteries, in particular powerful accumulators, stationary batteries and the like, in which lead material is pressed into a cavity of a hollow mould in a cold pressing process,
**characterized in that**
the material of a Pb circuit board (40), in a material quantity corresponding to the moulding (21) to be produced, together with a threaded bush (30) having an internal thread (31), resting on the Pb circuit board (40), is pressed into the cavity (60) of the hollow mould (50) by means of a pressurised plunger (70) in a cold pressing process, while simultaneously homogeneously incorporating the threaded bush (30) into the lead material of the moulding (21), by way of the bottom-side opening (61) of a cavity (60), corresponding to the form of the end terminal (20; 120) to be produced, of a one or multi-part hollow mould (50), and the moulding (21) with its threaded bush (30) homogeneously incorporated into the Pb material is afterwards removed from the hollow mould (50).

3. A method according to any one of claims 1 or 2,
**characterized in that**
the moulding (21) of the end terminal (20; 120) with its homogeneously integrated threaded bush (30) is coated with a plastic material.

4. A method according to any one of claims 1 or 3,
**characterized in that**
the outer wall surface (30c) of the threaded bush (30) is roughened or is provided with a rough ground in the form of a outer wall profile.

## Revendications

1. Procédé de fabrication de pôles terminaux (20 ; 120) pour le raccordement de connecteurs de pôles électriques pour des batteries, en particulier des accumulateurs de forte puissance, des batteries stationnaires ou similaires, où du plomb est moulé dans une cavité d'un moule creux par procédé de moulage à froid,
**caractérisé**
**en ce qu'**une douille (30) en acier ou en tout autre matériau approprié, pourvue d'un filet femelle (31) et d'une extrémité ouverte vers l'extérieur ainsi que d'une extrémité fermée à intégrer dans un corps moulé (21), et saillant hors de la cavité (60) par sa partie supérieure, est ajustée avec précision dans la partie supérieure d'une cavité (60), ouverte sur le fond et correspondant à la forme du pôle terminal (20 ; 120), d'un moule creux (50) constitué d'une ou de plusieurs pièces, le matériau d'une platine en plomb (40) étant ensuite moulé dans la cavité (60) du moule creux (50) par procédé de moulage à froid, au moyen d'un poinçon de presse (70) actionné sous pression avec une quantité de matériau correspondant au corps moulé (21) à fabriquer, la douille filetée (30) étant simultanément intégrée de manière homogène dans le plomb du corps moulé (21) avant que le corps moulé (21) soit retiré du moule creux (50) avec sa douille filetée (30) intégrée au plomb de manière homogène.

2. Procédé de fabrication de pôles terminaux (20 ; 120) pour le raccordement de connecteurs de pôles électriques pour des batteries, en particulier des accumulateurs de forte puissance, des batteries stationnaires ou similaires, où du plomb est moulé dans une cavité d'un moule creux par procédé de moulage à froid,
**caractérisé**
**en ce qu'**au moyen de l'ouverture (61) sur le fond d'une cavité (60) correspondant à la forme du pôle terminal (20 ; 120) à fabriquer d'un moule creux (50) constitué d'une ou de plusieurs pièces, le matériau d'une platine en plomb (40) est moulé par procédé de moulage à froid dans la cavité (60) du moule creux (50) au moyen d'un poinçon de presse (70) actionné sous pression avec une quantité de matériau correspondant au corps moulé (21) à fabriquer, avec une douille filetée (30) présentant un filet femelle (31) et montée sur la platine en plomb (40), la douille filetée (30) étant simultanément intégrée de manière homogène dans le plomb du corps moulé (21) avant que le corps moulé (21) soit retiré du moule creux (50) avec sa douille filetée (30) intégrée au plomb de manière homogène.

3. Procédé selon l'une des revendications 1 ou 2,
**caractérisé**
**en ce que** le corps moulé (21) du pôle terminal (20 ; 120) est gainé d'un matériau synthétique avec sa douille filetée (30) intégrée de manière homogène.

4. Procédé selon l'une des revendications 1 à 3,
**caractérisé**
**en ce que** la surface de paroi extérieure (30c) de la douille filetée (30) est rendue rugueuse ou est pourvue d'un fond rugueux sous la forme d'un profilage de paroi extérieure.
